# EUROPÄISCHE PATENTSCHRIFT

(11) **EP 1 390 935 B1**
(45) Veröffentlichungstag und Bekanntmachung des Hinweises auf die Patenterteilung: **04.01.2006**
(21) Anmeldenummer: 02747279.4
(22) Anmeldetag: 13.04.2002
(51) Int. Cl.: G09F 13/02, F21V 8/00

(54) **VORRICHTUNG ZUM INDIREKTEN AUSLEUCHTEN EINES INFORMATIONSTRÄGERS**
DEVICE FOR INDIRECTLY ILLUMINATING AN INFORMATION CARRIER
DISPOSITIF POUR ECLAIRER INDIRECTEMENT UN SUPPORT D'INFORMATIONS

(30) Priorität: 23.05.2001 DE 10125530
(43) Veröffentlichungstag der Anmeldung: 25.02.2004
(73) Patentinhaber: Röhm GmbH & Co. KG, 64293 Darmstadt (DE)
(72) Erfinder: SCHMIDT, Jann, 64291 Darmstadt (DE); BENZ, Volker, 64739 Hoechst (DE); ITTMANN, Günther, 64823 Gross-Umstadt (DE); BESEV, Ibrahim, 63500 Seligenstadt (DE)
(86) Internationale Anmeldenummer: PCT/EP2002/004133
(87) Internationale Veröffentlichungsnummer: WO 2002/095720

(56) Entgegenhaltungen:
- EP-A- 0 504 910
- DE-A- 3 941 231

## Beschreibung

Die Erfindung betrifft eine Vorrichtung zum indirekten Ausleuchten eines Informationsträgers, bestehend im wesentlichen aus einem Informationsträger (1), einer Lichtquelle (2) und einem transparenten Element (3) aus Glas oder Kunststoff mit einer rauhen und einer glatten Seite.

### Stand der Technik

EP-A 533 301 beschreibt scheibenförmige Lichtverteilungskörper aus nichtstreuendem und transparentem Material, wobei die Abstrahlfläche und/oder die dieser entgegengesetzte Fläche ganzflächig oder teilflächig eine zumindest teilweise reflektierende, die Totalreflexion unterbrechende Beschichtung, Kaschierung, Aufrauhung oder Struktur zur Verbesserung der Lichtverteilung im Lichtverteilungskörper aufweist. Der Lichtverteilungskörper kann zur Hinterleuchtung bzw. Durchleuchtung von Informationsträgern verwendet werden.

EP-A 656 548 betrifft gleichmäßig ausgeleuchtete Lichtleiterplatten, die von der Kante her beleuchtet werden, aufgebaut aus einem Matrixkunststoff A mit hoher, nicht wellenlängen-selektiver Transmission, vorzugsweise im Bereich des sichtbaren Lichts, und darin eingelagerten transparenten Partikeln aus einem vernetzten Polymerisat B mit einer Brechzahl n_{D}(B), die um mindestens 0,02 Einheiten höher liegt als die Brechzahl n_{D}(A) des Polymerisats A. Die Lichtleiterplatten selbst erscheinen in erleuchteten Zustand wegen der Streuwirkung der enthaltenen Partikel trüb und sind somit insbesondere für die Hinterleuchtung von teilweise transparenten, z. B. dünn bedruckten Informationsträgerfolien vorgesehen.

EP 0 893 708 A2 beschreibt einen Lichtleiter mit Vorwärtsstreuung, der mindestens eine Lichteinleitungsstelle und mindestens eine gleichmäßig auszuleuchtende größere Lichtaustrittsfläche aufweist. Der Lichtleiter besteht aus einem absorptionsarmen, transparenten Trägermaterial mit eingelagerten Streuperlen. Eine beidseitig rauhe Struktur kann dadurch erzeugt werden, daß das Lichtleitermaterial mittels Extrusion hergestellt wird. Durch die natürliche Schwundeigenschaft des Materials treten die Streuperlen ohne weiteres Zutun an der Oberfläche hervor, was die gewünschte rauhe Struktur bewirkt. Der Lichtleiter wird zur Hinterleuchtung von Informationsträgern oder Leuchtdiodenleisten verwendet. Die hinterleuchteten Materialien müssen daher eine gewisse Transparenz aufweisen, die noch eine befriedigende Durchleuchtung erlaubt.

### Aufgabe und Lösung

EP 0 893 708 A2 beschreibt einen Lichtleiter mit Vorwärtsstreuung, der mindestens eine Lichteinleitungsstelle und mindestens eine gleichmäßig auszuleuchtende größere Lichtaustrittsfläche aufweist. Der Lichtleiter besteht aus einem absorptionsarmen, transparenten Trägermaterial mit eingelagerten Streuperlen. Durch die enthaltenen Streuperlen erscheint das Material insbesondere im beleuchteten Zustand trüb. Der Lichtleiter kann somit lediglich zur Hinterleuchtung von Informationsträgern oder Leuchtdiodenleisten verwendet werden. Die hinterleuchteten Materialien müssen daher eine gewisse Transparenz aufweisen. Man kann daher meist nur speziell für diesen Zweck hergestellte Materialien, z. B. an sich transparente, dünn bedruckte Folien verwenden. Die Herstellung solcher Informationsträger ist aufwendig. Ist die ihre Bedruckung sehr intensiv, so kann die Durchleuchtbarkeit unbefriedigend sein. Ist die Bedruckung hingegen zu schwach bzw. zu dünn, erhält man zwar eine gute Durchleuchtung, der Kontrast der dargestellte Informationen kann jedoch als unzureichend empfunden werden.

Es wurde daher als Aufgabe gesehen, eine Vorrichtung bereitzustellen, die zur Beleuchtung konventioneller, per se wenig transparenter Informationsträger, wie z. B. Plakaten aus Papier etc., geeignet ist.

Die Aufgabe wird gelöst durch eine
Vorrichtung zum indirekten Ausleuchten eines Informationsträgers bestehend im wesentlichen aus einem Informationsträger (1), einer Lichtquelle (2) und einem transparenten Element (3) aus Glas oder Kunststoff
dadurch gekennzeichnet, daß
das transparente Element (3) eine glatte Fläche (31) und eine gegenüberliegende rauhe Fläche (32) aufweist, wobei die rauhe Fläche (32) eine Rauhtiefe Rz nach DIN 4768 von 1 bis 20 µm und Ra von 0,2 bis 5 µm aufweist, der Informationsträger (1) der rauhen Fläche (32) zugewandt ist und auf dieser anliegt, so daß er von der glatten Fläche (31) her durch das transparente Element hindurch betrachtet werden kann und die Lichtquelle (2) an einer weiteren Fläche (33) des transparenten Elements (3) so angeordnet ist, daß sie den Informationsträger (1) durch die Auskopplung des Lichts auf der rauhen Fläche (32) des transparenten Elements (3) indirekt beleuchten kann.

Der Erfindung liegt die Idee zugrunde, ein Lichtaustrittsfenster eines lichtdurchlässigen Elements, wie es als rauhe Struktur z. B. aus der EP 0 893 708 A2 im Prinzip bekannt ist, in ungekehrter Weise nicht für die Hinterleuchtung sondern für die indirekte Beleuchtung eines auf der rauen Flächen anliegenden Informationsträgers zu nutzen. Damit der so beleuchtete Informationsträger durch das transparente Element hindurch betrachtet werden kann, darf die dem Betrachter zugewandte Fläche nicht rau sein, sondern muß im wesentlichen glatt gestaltet sein, so daß das vom beleuchteten Informationsträger wiedergegebene Licht auf der Betrachterseite möglichst ungehindert auftreten kann.

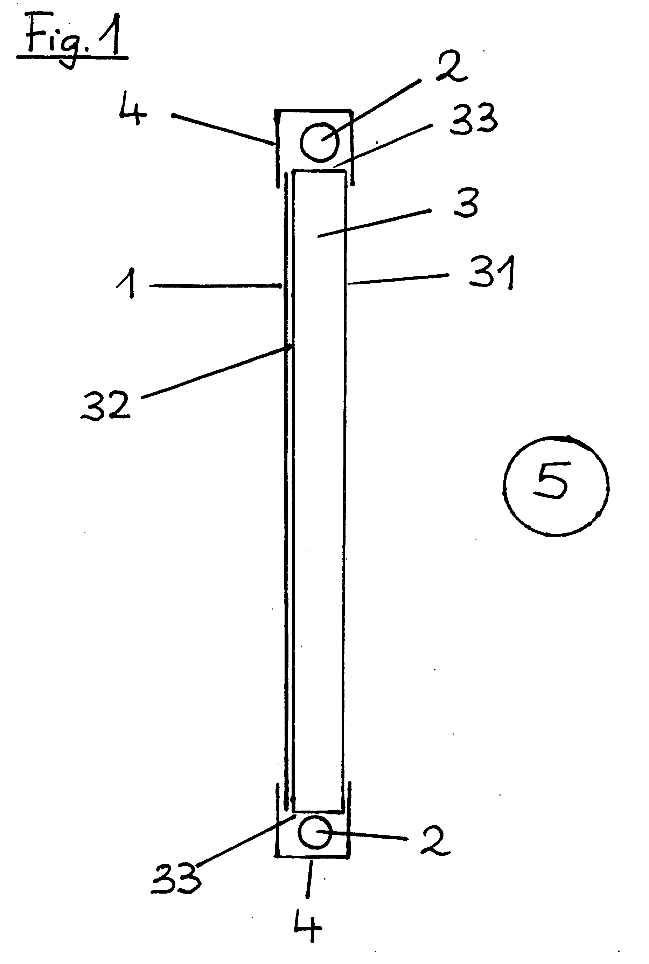

Die erfindungsgemäße Vorrichtung wird durch die Fig. 1 verdeutlicht, ist aber nicht auf diese Darstellung beschränkt.

Bezugszeichen:
(1) Informationsträger
(2) Lichtquelle
(3) Transparentes Element mit
   glatter Fläche (31) und rauher Fläche (32) und Fläche zur
   (Kanten-)Beleuchtung (33)
(4) Rahmeneelement
(5) Betrachterposition

### Ausführung der Erfindung

Die Erfindung betrifft eine Vorrichtung zum indirekten Ausleuchten eines Informationsträgers, bestehend im wesentlichen aus einem Informationsträger (1), einer Lichtquelle (2) und einem transparenten Element (3) aus Glas oder Kunststoff.

Das transparente Element (3) kann aus Glas, z. B. Silikatglas, oder Kunststoff bestehen. Bevorzugt ist ein thermoplastischer Kunststoff mit guter Transparenz. Die Transmission T im sichtbaren Bereich soll mindestens 40, bevorzugt mindestens 60 oder 80 %, besonders bevorzugt mindestens 85 % betragen (Lichttransmissionsgrad für Tageslicht (Normlichtart D65) τ_{D65} s. z. B. DIN 67 507). Geeignete transparente Kunststoffe sind z. B. Polystyrol, Polycarbonat, Polyethylentherephthalat, Polyvinylchlorid, COC etc.. Besonders bevorzugt ist wegen seiner hohen Transparenz Polymethylmethacrylat.

Das transparente Element (3) weist eine glatte Fläche (31) und eine gegenüberliegende rauhe Fläche (32) auf, sowie eine weitere Fläche (33), an der das Licht für die indirekte Beleuchtung mittels der Lichtquelle (2) eingestrahlt wird.

Bevorzugt hat das transparente Element (3) die Form einer Platte. In diesem Fall wären die beiden größeren gegenüberliegenden Flächen die rauhe bzw. die glatte Fläche und eine oder mehrere der kleineren Kantenflächen als die weitere Fläche (33) anzusehen.

Ebenso können entsprechende Flächen jedoch auch an anders geformten Körpern wie Stäben, Zylindern etc. lokalisiert werden, die je nach Anwendungszweck auch im Sinne der Erfindung genutzt werden können.

Die rauhe Fläche (32) besitzt eine Rautiefe Rz nach DIN 4768 von 1 bis 20, bevorzugt 2 bis 10, besonders bevorzugt von 4 bis 8 µm und Ra von 0,2 bis 5, bevorzugt von 0,5 bis 2 µm. Die Rauhigkeit kann gleichmäßig sein oder sich in einem Gradienten von der Fläche zur (Kanten-)Beleuchtung her erstrecken.

Die glatte Fläche (31) kann als glatt gelten, wenn sie z. B. eine Rautiefe Rz und Ra mit Werten unterhalb von denen der rauhen Flächen, z. B. von Rz weniger als 1 µm bzw. Ra weniger als 0,2 µm aufweist.

Der Informationsträger (1) ist der rauhen Fläche (32) zugewandt und liegt auf dieser an, so daß er von der glatten Fläche (31) her durch das transparente Element hindurch betrachtet werden kann.

Das transparente Element (3) kann z. B. aus einem beidseitig glatten Element hergestellt werden, indem man die erforderliche Aufrauhung nachträglich einseitig erzeugt. Die kann durch mechanisches Aufrauhen, z. B. Sandstrahlen, Schleifen oder ähnlichen Verfahren erfolgen, die dazu geeignet sind rauhe Oberflächen aus Glas oder Kunststoff zu erzeugen.

Desweiteren kann man auch ein polymerisierendes Harz, z. B. ein in einem polymerisationsfähigen Monomeren, z. B. einem Vinylmonomeren, gelöstes Polymer, z. B. Polymethylmethacrylat gelöst in Methylmethacrylat, in einer einseitig aufgerauhten Form in Gegenwart eines Polymerisationinitiators in ansich bekannter Weise polymerisieren lassen. Man kann z. B. das sogenannte Gußkammerverfahren (s. z. B. die DE 25 44 245, EP-B 570 782 oder EP-A 656 548) anwenden, bei die Polymerisation einer Kunststoffscheibe zwischen zwei Glasplatten erfolgt, die mit einer umlaufenden Schnur abgedichtet werden. Für die rauhe Fläche verwendet man eine Glasscheibe mit rauher Struktur als Negativabdruck.

Ebenso kann man eine Formmasse aus einem thermoplastischen Kunststoff in eine Form mit einseitig rauher Struktur in an sich bekannter Weise spritzgießen.

Auf dem Wege der Extrusion kann man z. B. ein plattenförmiges Extrudat mit einer einseitig rauhen Struktur versehen, indem man eine das noch weiche Extrudat einseitig über eine Kalanderwalze mit rauher Struktur glättet.

Weiterhin kann man eine Streuperlen enthaltende Schicht (s. z. B. EP 0 893 708 A2 oder EP-B 570 782) mittels Coextrusion oder Laminieren auf zweite Kunststoffschicht ohne Streuperlen aufbringen. Es entsteht dann eine einseitig rauhe Struktur bedingt durch die Schrumpfung der streuperlenhaltigen Schicht während der Abkühlung, wobei Streuperlen teilweise aus der Oberfläche der Matrix herausragen. Bei der zweiten Kunststoffschicht kann es auch z. B. um eine Kunststoffplatte mit an sich glatter Oberfläche und guter Transparenz handeln. Da auf diese Weise, die Streuperlen enthaltende Schicht in Vergleich zur zweiten Kunststoffschicht recht dünn gehalten werden kann, z. B. nur 10 bis 100 µm, wirkt sich der im allgemeinen leicht eintrübende Effekt der die Streuperlen enthaltende Schicht nur geringfügig auf das Coextrudat insgesamt aus.

Das transparente Elements (3) ein kann demnach ein Verbund aus einer tragenden Schicht aus einem transparenten thermoplastischen Kunststoff sein, auf die eine dünne Schicht aus einem transparenten thermoplastischen Kunststoff, enthaltend Lichtstreuperlen, mittels Coextrusion oder Laminieren aufgebracht wurde.

Im Prinzip können auch Materialien verwendet werden, die gleichmäßig verteilte Streuperlen enthalten (s. z. B. EP-B 570 782 oder EP-A 656 548). Entsprechende Gußplatten auf der Basis von Polymethylmethacrylat wären dann wie oben beschrieben mit einer einseitigen Aufrauhung zu versehen, z. B. durch Schleifen. Diese Variante ist allerdings weniger bevorzugt, da die entsprechenden Platten bzw. Formkörper im allgemeinen in der Durchsicht bei indirekter Beleuchtung von der Kantenfläche her leicht trüb erscheinen. Dies ist auf den lichtstreuenden Effekt der gleichmäßig verteilte Streuperlen zurückzuführen. Bei Anwendungen, bei denen dies nicht als störend empfunden wird kann dies allerdings toleriert werden.

Bei dem Informationsträger (1) kann es sich z. B. um ein Plakat aus Papier, ein Bild etc. handeln. Beleuchtet werden kann z. B. auch ein LCD-Display oder ähnliches. Da der Informationsträger indirekt beleuchtet wird, braucht er nicht transparent zu sein, wie dies bei einer Hintergrundbeleuchtung der Fall wäre.

Als Lichtquelle (2) können z. B. die in der EP 0 533 301 genannten Mittel verwendet werden. Geeignet sind punktförmige Glühlampen, z. B. Niedervolt Halogenglühlampen, ein oder mehrere Enden von Lichtleitern, eine oder mehrere Leuchtdioden etc.. Diese können z. B. in einem Rahmen (4) an einer Kante, bzw. einer Kantenfläche oder Stirnfläche, seitlich der indirekt auszuleuchtenden Fläche, des transparenten Elements (3) angeordnet sein.

Die Lichtquelle (2) ist an einer weiteren Fläche (33) des transparenten Elements (3), z. B. an einer Kantenfläche im Falle einer ebenen Platte, so angeordnet, daß sie den Informationsträger (1) durch die Auskopplung des Lichts auf der rauhen Fläche (32) des transparenten Elements (3) erhellt bzw. indirekt beleuchten kann.

## Patentansprüche

1. Vorrichtung zum indirekten Ausleuchten eines Informationsträgers bestehend im wesentlichen aus einem Informationsträger (1), einer Lichtquelle (2) und einem transparenten Element (3) aus Glas oder Kunststoff
**dadurch gekennzeichnet, daß**
das transparente Element (3) eine glatte Fläche (31) und eine gegenüberliegende rauhe Fläche (32) aufweist, wobei die rauhe Fläche (32) eine Rauhtiefe Rz nach DIN 4768 von 1 bis 20 µm und Ra von 0,2 bis 5 µm aufweist, der Informationsträger (1) der rauhen Fläche (32) zugewandt ist und auf dieser anliegt, so daß er von der glatten Fläche (31) her durch das transparente Element hindurch betrachtet werden kann und die Lichtquelle (2) an einer weiteren Fläche (33) des transparenten Elements (3) so angeordnet ist, daß sie den Informationsträger (1) durch die Auskopplung des Lichts auf der rauhen Fläche (32) des transparenten Elements (3) indirekt beleuchten kann.

2. Vorrichtung nach Anspruch 2, **dadurch gekennzeichnet, daß** das transparente Element (3) die Form einer ebenen Platte hat.

3. Vorrichtung nach Anspruch 1 oder 2, **dadurch gekennzeichnet, daß** das transparente Element (3) aus einem transparenten thermoplastischen Kunststoff besteht.

4. Vorrichtung nach einem oder mehreren der Ansprüche 1 bis 3, **dadurch gekennzeichnet, daß** das transparente Elements (3) ein Verbund aus einer tragenden Schicht aus einem transparenten thermoplastischen Kunststoff ist, auf die eine dünne Schicht aus einem transparenten thermoplastischen Kunststoff, enthaltend Lichtstreuperlen, mittels Coextrusion oder Laminieren aufgebracht wurde.

## Claims

1. Device for indirectly illuminating an information carrier consisting essentially of an information carrier (1), a light source (2) and a transparent element (3) made of glass or plastics, **characterised in that** the transparent element (3) has a smooth surface (31) and an opposing rough surface (32), the rough surface (32) having a depth of roughness Rz according to DIN 4768 of 1 to 20 µm and Ra of 0.2 to 5 µm, the information carrier (1) facing the rough surface (32) and abutting thereon so that it can be observed from the smooth surface (31) through the transparent element, and the light source (2) being arranged on another surface (33) of the transparent element (3) in such a way that it is able to indirectly illuminate the information carrier (1) by diffusing the light through the rough surface (32) of the transparent element (3).

2. Apparatus according to claim 2, **characterised in that** the transparent element (3) is in the form of a flat panel.

3. Apparatus according to claim 1 or 2, **characterised in that** the transparent element (3) consists of a transparent thermoplastic plastics.

4. Apparatus according to one or more of claims 1 to 3, **characterised in that** the transparent element (3) is a combination of a support layer of a transparent thermoplastic plastics on to which a thin layer of a transparent thermoplastic plastics containing light diffraction beads has been applied by co-extrusion or lamination.

## Revendications

1. Dispositif d'éclairage indirect d'un support d'informations composé essentiellement d'un support d'informations (1), d'une source de lumière (2) et d'un élément transparent (3) en verre ou en matière plastique,
**caractérisé en ce que**
l'élément transparent (3) présente une surface lisse (31) et une surface rugueuse (32) en vis-à-vis, la surface rugueuse (32) ayant une profondeur d'une rugosité de surface Rz selon la norme DIN 4768 de 1 à 20 µm et Ra de 0,2 à 5 µm, le support d'informations (1) étant tourné vers la surface rugueuse (32) et étant appuyé sur celle-ci de sorte qu'il peut être pris en compte depuis la surface lisse (31) à travers l'élément transparent et que la source de lumière (2) est disposée sur une autre surface (33) de l'élément transparent (3) de sorte qu'elle peut éclairer indirectement le support d'informations (1) par le découplage de la lumière sur la surface rugueuse (32) de l'élément transparent (3).

2. Dispositif selon la revendication 2,
**caractérisé en ce que**
l'élément transparent (3) a la forme d'un plateau plan.

3. Dispositif selon la revendication 1 ou 2,
**caractérisé en ce que**
l'élément transparent (3) est en matière thermoplastique transparente.

4. Dispositif selon une ou plusieurs des revendications 1 à 3,
**caractérisé en ce que**
l'élément transparent (3) est un composé d'une couche porteuse en matière thermoplastique transparente sur laquelle a été appliqué par coextrusion ou laminage une couche fine en matière thermoplastique transparente comprenant des perles dispersives de lumière.
